# EUROPÄISCHE PATENTSCHRIFT

(11) **EP 2 177 569 B1**
(45) Veröffentlichungstag und Bekanntmachung des Hinweises auf die Patenterteilung: **13.07.2011**
(21) Anmeldenummer: 08166704.0
(22) Anmeldetag: 15.10.2008
(51) Int. Cl.: C08L 75/04, C08K 3/22, C08K 9/06, C08J 5/18, C08G 18/82, C08J 3/24, C08J 3/22

(54) **Prozesshilfsmittel für thermoplastische Polyurethane**
Process aid for thermoplastic polyurethanes
Auxiliaire de traitement pour polyuréthane thermoplastique

(43) Veröffentlichungstag der Anmeldung: 21.04.2010
(73) Patentinhaber: Evonik Degussa GmbH, 45128 Essen (DE)
(72) Erfinder: Welker, Thomas, 63454 Hanau (DE); Boes, Ulrich, 60528 Frankfurt a.M. (DE); Menzel, Frank Dr., 63456 Hanau (DE); Kuhn, Dieter, 63517 Rodenbach (DE); Schachtely, Uwe, 63796 Kahl am Main (DE); Lagneaux, Didier, 38290 Frontonas (FR); Sautel, Henri, 38290 Frontonas (FR)

(56) Entgegenhaltungen:
- DE-A1- 4 339 475
- DE-A1- 19 706 380
- DATABASE WPI Week 200674 Thomson Scientific, London, GB; AN 2006-713287 XP002515875 -& JP 2006 274000 A (DAINIPPON INK & CHEM INC) 12. Oktober 2006 (2006-10-12)
- DATABASE WPI Week 199424 Thomson Scientific, London, GB; AN 1994-197356 XP002515998 -& JP 06 136320 A (MITSUBISHI KASEI CORP) 17. Mai 1994 (1994-05-17)

## Beschreibung

Die Erfindung betrifft ein Prozesshilfsmittel, welches bei der Verarbeitung von thermoplastischen Polyurethanen eingesetzt werden kann, sowie dessen Herstellung und Verwendung. Weiterhin betrifft die Erfindung ein Verfahren zur Herstellung einer selbsttragenden Folie mit Hilfe des Prozesshilfsmittels.

Thermoplastische Polyurethane (TPU) werden in großer Menge und in einer breiten Typenpalette hergestellt. Dabei ist diese Stoffgruppe auf Grund ihrer guten elastischen Eigenschaften, verbunden mit der Möglichkeit einer thermoplastischen Formgebung, ihrer Chemikalienbeständigkeit und ihrer Abriebfestigkeit, besonders attraktiv. Sie sind daher beispielsweise für mechanisch und thermisch beanspruchte Beschichtungen, Schläuche, Rohre, Profile, Verschleißteile sowie andere Formteile geeignet.

Thermoplastische Polyurethane sind aus linearen Polyolen, meist Polyester- oder Polyether-Polyolen, organischen Isocyanaten und kurzkettigen Diolen (Kettenverlängerer) aufgebaut. Zusätzlich können Katalysatoren zur Beschleunigung der Bildungsreaktion zugesetzt werden. Sie sind teilkristalline Werkstoffe und gehören zu der Klasse der thermoplastischen Elastomere. Charakteristisch für sie ist der segmentierte Aufbau der Makromoleküle in einen kristallinen (harten) Bereich und in einen amorphen (weichen) Bereich, der die Eigenschaften eines thermoplastischen Polyurethanes bestimmt.

Die bei stark unterschiedlichen Temperaturen schmelzenden harten und weichen Strukturbereiche, die bei Raumtemperatur ein physikalisches Netzwerk bilden, und ungünstige rheologische Eigenschaften der TPU-Schmelze führen zu einem komplizierten Verarbeitungsverhalten der Polyurethane einhergehend mit einem irreversiblen Kettenabbau während der thermoplastischen Verarbeitung.

Um diese Nachteile zu überwinden, wird im Stand der Technik vorgeschlagen, Vernetzung in das TPU einzuführen. Wie in WO 2005/054322 offenbart, ist die Ausbildung von Vernetzungen durch Zugabe von Isocyanaten zum geschmolzenen thermoplastischen Polyurethan als Prepolymervernetzung bekannt. Dieses Verfahren kann sich jedoch aufgrund der schwierigen apparativen Ausgestaltung bislang in der Praxis nicht durchsetzen. Wie in WO 2005/054322 weiter ausgeführt wird, liegt dies unter anderem an den Schwierigkeiten das üblicherweise als Granulat vorliegende TPU möglichst homogen mit den flüssigen oder zähflüssigen Isocyanatgruppen aufweisenden Verbindungen zu vermischen.

Zudem stellt die Umsetzung des thermoplastischen Polyurethanes mit den Isocyanatgruppen aufweisenden Verbindungen eine schwierige chemische Aufgabe dar, da das Vermischen des geschmolzenen TPU mit dem Prepolymer üblicherweise in einem Extruder durchgeführt wird, der bei einer zu schnellen oder zu dichten Vernetzung verstopfen kann.

In WO2005/054322 wird vorgeschlagen, diese Schwierigkeiten bei der Umsetzung von thermoplastischen Polyurethanen mit Isocyanatgruppen aufweisenden Verbindungen durch ein Verfahren zu überwinden, bei dem aliphatische Isocyanate mit mindestens drei Isocyanatgruppen und aromatische Isocyanate mit zwei Isocyanatgruppen eingesetzt werden. Hiermit soll eine sichere Prozessführung ermöglicht werden. Nachteilig an dem Verfahren ist, dass die Handhabungsprobleme und Dosierprobleme nach wie vor bestehen, und die Kombination von difunktionellen und trifunktionellen Isocyanaten für spezielle thermoplastische Polyurethane, jedoch nicht universal, einsetzbar ist.

Die Zugabe von Diisocyanaten zu einem thermoplastischen Polyurethan während der thermoplastischen Verarbeitung ist nicht neu. In DE-A-4115508 wird ausgeführt, dass hierdurch eine Verbesserung der Eigenschaften ergibt.

In DE-A 4112329 wird ein Verfahren offenbart, bei dem die Dosierungsprobleme des zugesetzten Isocyanates dadurch verringert werden sollen, indem man das Ausgangs-TPU mit einem unter den Verarbeitungsbedingungen flüssigen Polyisocyanat einer Quellung unterwirft.

In WO2006/128793 wird ein Verfahren offenbart, bei dem man ein durch Sol-Gel-Verfahren erhaltenes Siliciumdioxid, ein Polyol und ein Isocyanat unter Bildung eines thermoplastischen Polyurethanes zur Reaktion bringt, wobei das Siliciumdioxid mit wenigstens einem der Einsatzstoffe vorvermischt wird. Hierdurch soll die Flexibilität des Polyurethanes erhöht werden.

Nachteilig an den bekannten Verfahren ist, dass mit ihnen die komplexen Verarbeitungsprobleme nur teilweise gelöst werden. Hier sind zu nennen, die Handhabungsprobleme mit Isocyanaten, Dosierprobleme, rheologische Probleme während der Verarbeitung, ungenügende Festigkeiten und ungenügende Zug- und Druckverformung der Produkte.

Aufgabe der vorliegenden Erfindung war es ein Prozesshilfsmittel bereitzustellen, mit dem es möglich ist die Eigenschaften bestehender thermoplastische Polyurethane bei der thermoplastischen Verformung so zu beeinflussen, dass diese Nachteile nicht mehr auftreten. Aufgabe der Erfindung war es weiterhin ein Verfahren zur Herstellung dieses Prozesshilfsmittels bereitzustellen.

Gegenstand der Erfindung ist ein Prozesshilfsmittel enthaltend
a) 10 - 50 Gew.-% hydrophobierte, wenigstens teilweise aggregierte Metalloxidpartikel ausgewählt aus der Gruppe bestehend aus Aluminiumoxid, Siliciumdioxid und Mischungen der vorgenannten Metalloxide,
b) 20 - 75 Gew.-% ein oder mehrere thermoplastische Polyurethane,
c) 0,5 - 25 Gew.-% ein oder mehrere Isocyanate,
d) 0,5 - 15 Gew.-% ein oder mehrere als Gleit- und Dispergierhilfsmittel wirkende Verbindungen
wobei die Summe der Bestandteile a) bis d) wenigstens 90, bevorzugt wenigstens 95 Gew.-%, bezogen auf das Prozesshilfsmittel beträgt.

Die Komponenten des Prozesshilfsmittels sind weitestgehend homogen verteilt.

### a) Hydrophobierte Metalloxidpartikel

Bei den hydrophobierten Metalloxidpartikeln im Rahmen dieser Erfindung handelt es sich um hydrophobierte, wenigstens teilweise aggregierte Metalloxidpartikel, ausgewählt aus der Gruppe bestehend aus Aluminiumoxid, Siliciumdioxid und Mischungen der vorgenannten Metalloxide. Siliciumdioxid soll dabei als Metalloxid betrachtet werden. Der Begriff "Mischungen" umfasst physikalische Mischungen und chemische Mischungen, in denen die Metalloxidkomponenten auf molekularer Ebene gemischt sind.

Unter "hydrophobierten Metalloxidpartikeln" sind solche zu verstehen, die durch Reaktion von auf der Oberfläche von nicht hydrophobierten Metalloxidpartikeln vorliegenden reaktiven Gruppen, beispielsweise Hydroxylgruppen, mit einem Oberflächenmodifizierungsmittel erhalten werden.

Unter "aggregiert" ist zu verstehen, dass sogenannte Primärpartikel, die bei der Genese von nicht hydrophobierten Metalloxidpartikeln zuerst entstehen, sich im weiteren Reaktionsverlauf fest miteinander unter Bildung eines dreidimensionalen Netzwerkes verbinden. Diese Bindungen, sind im Gegensatz zu Agglomeraten, mit herkömmlichen Dispergieraggregaten nicht mehr zu trennen.

Die Beschreibung "wenigstens teilweise aggregiert" soll klarstellen, dass das Vorliegen von Aggregaten wesentlich ist für die Erfindung. Vorzugsweise ist der Anteil an Aggregaten gegenüber isolierten Einzelpartikeln hoch, das heißt, wenigstens 80% der hydrophobierten Metalloxidpartikel sollten in Form von Aggregaten vorliegen, beziehungsweise die Partikel des Metalloxides vollständig in aggregierter Form vorliegen. Das Verhältnis Aggregat zu isoliertem Einzelpartikel kann beispielsweise durch quantitative Auswertung von TEM-Aufnahmen (TEM = Transmission-Elektronen-Mikroskopie) ermittelt werden.

Die hydrophobierten Metalloxidpartikel liegen im Falle von Siliciumdioxidpartikeln amorph, im Falle von Aluminiumoxid-Partikeln kristallin und im Falle von Mischoxiden, je nach dem überwiegenden Anteil der Mischoxidkomponente amorph oder kristallin vor.

Als Oberflächenmodifizierungsmittel können beispielsweise Silane, einzeln oder als Mischung, eingesetzt werden.
Beispielhaft seien genannt:
Organosilane (RO)₃Si(CₙH₂ₙ₊₁)
   mit R = Alkyl, wie Methyl, Ethyl, n-Propyl, i-Propyl, Butyl und n = 1-20.
Organosilane (R¹)ₓ(RO)_{y}Si(CₙH₂ₙ₊₁)
   mit R = Alkyl, wie Methyl, Ethyl, n-Propyl, i-Propyl, Butyl;
   R₁ = Alkyl, wie Methyl, Ethyl, n-Propyl, i-Propyl, Butyl, Cycloalkyl; n = 1-20; x+y = 3, x = 1, 2; y = 1, 2.
Halogenorganosilane X₃Si(CₙH₂ₙ₊₁)
   mit X = Cl, Br; n = 1-20.
Halogenorganosilane X₂ (R) Si (CₙH₂ₙ₊₁)
   mit X = Cl, Br; R = Alkyl, wie Methyl, Ethyl, n-Propyl, i-Propyl, Butyl-, Cycloalkyl; n = 1-20
Halogenorganosilane X (R)₂Si(CₙH₂ₙ₊₁)
   mit X = Cl, Br; R = Alkyl, wie Methyl-, Ethyl-, n-Propyl-, i-Propyl-, Butyl-, Cycloalkyl; n = 1-20
Organosilane (RO)₃Si(CH₂)ₘ-R¹
   mit R = Alkyl, wie Methyl-, Ethyl-, Propyl-; m=0,1-20; R¹ = Methyl, Aryl wie -C₆H₅, substituierte Phenylreste, C₄F₉, OCF₂-CHF-CF₃, C₆F₁₃, OCF₂CHF₂, Sₓ-(CH₂)₃Si(OR)₃;
Organosilane (R₂)ₓ(RO)_{y}Si(CH₂)ₘ-R¹
   mit R¹ = Methyl, Aryl, wie C₆H₅, substituierte Phenylreste, C₄F₉, OCF₂-CHF-CF₃, C₆F₁₃, OCF₂CHF₂, Sₓ-(CH₂)₃S1(OR)₃, SH, NR³R⁴R⁵ mit
   R₃= Alkyl, Aryl; R₄ = H, Alkyl, Aryl; R₅ H, Alkyl, Aryl, Benzyl, C₂H₄NR⁶R⁷ mit R⁶ = H, Alkyl und R⁷ = H, Alkyl;
   R₂ = Alkyl; x+y=3; x=1,2; y=1,2; m=0,1 bis 20;
Halogenorganosilane X₃Si(CH₂)ₘ-R
   mit X = Cl, Br; R = Methyl, Aryl wie C₆H₅, substituierte Phenylreste, C₄F₉, OCF₂-CHF-CF₃, C₆F₁₃, O-CF₂-CHF₂, Sₓ-(CH₂)₃Si(OR¹)₃, wobei R¹ = Methyl, Ethyl, Propyl, Butyl und x = 1 oder 2, SH; m = 0,1-20;
Halogenorganosilane R¹X₂Si(CH₂)ₘR²
   mit X= Cl, Br; R¹ = Alkyl, wie Methyl, Ethyl, Propyl R² = Methyl, Aryl wie C₆H₅, substituierte Phenylreste, C₄F₉, OCF₂-CHF-CF₃, C₆F₁₃, O-CF₂-CHF₂, -OOC(CH₃)C=CH₂, -Sₓ-(CH₂)₃Si(OR³)₃, wobei R³ = Methyl, Ethyl, Propyl, Butyl und x = 1 oder 2, SH.
   m = 0,1-20;
Halogenorganosilane R¹₂XSi(CH₂)ₘR²
   mit X = Cl, Br; R¹ = Alkyl, wie Methyl, Ethyl, Propyl R² = Methyl, Aryl wie C₆H₅, substituierte Phenylreste, C₄F₉, OCF₂-CHF-CF₃, C₆F₁₃, O-CF₂-CHF₂, -Sₓ-(CH₂)₃Si(OR³)₃, wobei R³ = Methyl, Ethyl, Propyl, Butyl und x=1 oder 2, SH;
   m = 0,1-20;

Silazane R²R¹₂SiNHSiR¹₂R² mit R¹,R²= Alkyl, Vinyl, Aryl.

Cyclische Polysiloxane D3, D4, D5 und ihre Homologen, wobei unter D3, D4 und D5 cyclische Polysiloxane mit 3, 4 oder 5 Einheiten des Typs -O-Si(CH₃)₂ verstanden wird, z.B. Octamethylcyclotetrasiloxan = D4.
Polysiloxane bzw. Silikonöle des Typs
   Y-O-[(R¹R²SiO)ₘ-(R³R⁴SiO)ₙ]ᵤ-Y, mit
R¹, R², R³, R⁴ = unabhängig voneinander Alkyl, wie CₙH₂ₙ₊₁, n = 1-20; Aryl, wie Phenylradikale und substitutierte Phenylradikale, (CH₂)ₙ-NH₂, H
Y = CH₃, H, CₙH₂ₙ₊₁, n=2-20; Si(CH₃)₃, Si(CH₃)₂H, Si(CH₃)₂OH, Si(CH₃)₂(OCH₃), Si(CH₃)₂(CₙH₂ₙ₊₁), n = 2-20
m = 0, 1, 2, 3,... ∞, bevorzugt 0, 1, 2, 3,... 100000,
n = 0, 1, 2, 3,... ∞, bevorzugt 0, 1, 2, 3,... 100000,
u = 0,1,2,3,.... ∞, bevorzugt 0, 1, 2, 3,... 100000.

Kommerziell erhältliche Produkte sind beispielsweise RHODORSIL® OILS 47 V 50, 47 V 100, 47 V 300, 47 V 350, 47 V 500, 47 V 1000, Wacker Silicon Fluids AK 0,65, AK 10, AK 20, AK 35, AK 50, AK 100, AK 150, AK 200, AK 350, AK 500, AK 1000, AK 2000, AK 5000, AK 10000, AK 12500, AK 20000, AK 30000, AK 60000, AK 100000, AK 300000, AK 500000, AK 1000000 oder Dow Corning® 200 fluid.

Bevorzugt können als Oberflächenmodifizierungsmittel solche eingesetzt werden, die dazu führen dass die hydrophobierten Metalloxidpartikel auf ihrer Oberfläche die Gruppe 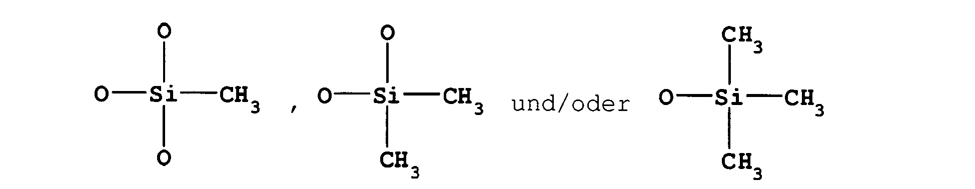 tragen. Der Nachweis dieser Gruppierungen kann spektroskopisch erfolgen und ist dem Fachmann bekannt.

Als besonders geeignete hydrophobierte Metalloxidpartikel sind solche anzusehen, die mittels pyrogener Verfahren hergestellt wurden. Hierzu zählen die Flammenhydrolyse und die Flammenoxidation. Dabei werden oxidierbare und/oder hydrolysierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet sind Aluminiumchlorid und Siliciumtetrachlorid.

Die so erhaltenen Metalloxidpartikel sind weitestgehend porenfrei und weisen auf der Oberfläche freie Hydroxylgruppen auf.

Diese werden wie weiter vorne beschrieben in einem nachfolgenden Schritt, teilweise oder vollständig, mit einem Oberflächenmodifizierungsmittel umgesetzt, damit die Partikel ihre hydrophoben Eigenschaften erhalten. Der Grad der Oberflächenmodifizierung kann durch Parameter wie Methanolbenetzbarkeit oder die OH-Gruppen-Dichte charakterisiert werden. Die Bestimmung dieser Parameter ist dem Fachmann bekannt.

Im Rahmen der vorliegenden Erfindung hat es sich als vorteilhaft erwiesen, wenn die OH-Gruppen-Dichte der hydrophobierten Metalloxidpartikel gleich oder kleiner als 1,0 OH/nm² ist (Bestimmung gemäß J. Mathias und G. Wannemacher, Journal of Colloid and Interface Science 125 (1988)) durch Reaktion mit Lithiumaluminiumhydrid).

Ganz besonders geeignet sind hydrophobierte, aggregierte Siliciumdioxidpartikel pyrogener Herkunft in Form von Pulvern oder Granulaten. In der Tabelle 1 sind beispielsweise solche kommerziell als sogenannte R-AEROSIL®-Typen (Evonik Degussa) erhältlichen Pulver wiedergegeben.

**Tabelle 1: Hydrophobierte Siliciumdioxidpartikel**

| Typ AEROSIL® | BET-Oberfläche | Trocknungsverlust | pH | Kohlenstoff |
|---|---|---|---|---|
| | m²/g | Gew.-% | | Gew.-% |
| R 972 | 110 ± 20 | < 0,5 | 3,6 - 4,4 | 0,6 - 1,2 |
| R 974 | 170 ± 20 | < 0,5 | 3,7 - 4,7 | 0,7 - 1,3 |
| R 104 | 150 ± 25 | - | > 4,0 | 1,0 - 2,0 |
| R 106 | 250 ± 30 | - | > 3,7 | 1,5 - 3,0 |
| R 202 | 100 ± 20 | < 0,5 | 4,0 - 6,0 | 3,5 - 5,0 |
| R 805 | 150 ± 25 | < 0,5 | 3,5 - 5,5 | 4,5 - 6,5 |
| R 812 | 260 ± 30 | < 0,5 | 5,5 - 7,5 | 2,0 - 3,0 |
| R 816 | 190 ± 20 | < 1,0 | 4,0 - 5,5 | 0,9 - 1,8 |
| R 7200 | 150 ± 25 | < 1,5 | 4,0 - 6,0 | 4,5 - 6,5 |
| R 8200 | 160 ± 25 | < 0,5 | > 5,0 | 2,0 - 4,0 |
| R 9200 | 170 ± 20 | < 1,5 | 3,0 - 5,0 | 0,7 - 1,3 |

| | | | | |
|---|---|---|---|---|
| a) in Anlehnung an DIN 66131; b) in Anlehnung an DIN/ISO787/2 ASTM D 280, JIS K 5101/21; c) in Anlehnung an DIN/ISO787/9, ASTM D 1208, JIS K 5101/24; in 1:1 Methanol:Wasser (Volumenanteile) | | | | |

Erfindungsgemäß beträgt der Anteil an hydrophobierten, Metalloxidpartikeln 10 bis 50 Gew.-% und bevorzugt 20 bis 40 Gew.-%, bezogen auf das Prozesshilfsmittel.

Aufgrund des in dem erfindungsgemäßen Prozesshilfsmittel vorliegenden feuchtigkeitsempfindlichen Isocyanates sollte der Anteil an Wasser in und auf den hydrophobierten Metalloxidpartikeln minimal sein. In der Regel sollte er kleiner als 1 Gew.-%, idealerweise kleiner als 0,5 Gew.-%, jeweils bezogen auf das Prozesshilfsmittel sein.

Die Stampfdichte der eingesetzten Pulver ist nicht kritisch. Es können nachträglich verdichtete oder strukturmodifizierte Typen eingesetzt werden. Die Strukturmodifizierung kann durch mechanische Einwirkung mit einer eventuellen Nachvermahlung erfolgen. Die Strukturmodifizierung kann zum Beispiel mit einer Kugelmühle oder einer kontinuierlich arbeitenden Kugelmühle erfolgen. Die Nachvermahlung kann zum Beispiel mittels einer Luftstrahlmühle, Zahnscheibenmühle oder Stiftmühle erfolgen.

Nachträglich verdichtete oder strukturmodifizierte Typen führen zu einer besonders guten Verarbeitbarkeit. Jedoch können in dem erfindungsgemäßen Prozesshilfsmittel auch die in der Regel preisgünstigeren, nicht verdichteten hydrophobierten Metalloxidpartikel vorliegen. Diese weisen in der Regel einen Stampfdichte von ca. 50 g/l auf.

### b) Thermoplastisches Polyurethan

Für das erfindungsgemäße Prozesshilfsmittel eignen sich prinzipiell alle dem Fachmann bekannten thermoplastischen Polyurethane.

Diese werden in der Regel durch Umsetzung eines Diisocyanates mit einem OH-terminierten Polyester oder einem OH-terminierten Polyether mit einem oder mehreren als Kettenverlängerer wirkenden Verbindungen erhalten.

Als Polyester werden in der Regel lineare Polyester mit einem mittleren Molekulargewicht (Mn) von 500 bis 10000, bevorzugt von 700 bis 5000 und besonders bevorzugt von 800 bis 4000 eingesetzt.

Die Polyester werden durch Veresterung mit einem oder mehreren Glykolen mit einer oder mehreren Dicarbonsäuren oder deren Anyhdriden erhalten. Dabei können die Dicarbonsäuren aliphatisch, cycloaliphatisch oder aromatisch sein.

Geeignete Dicarbonsäuren sind beispielsweise Bernsteinsäure, Glutarsäure, Adipinsäure, Pimelinsäure, Azelainsäure, Sebacinsäure, Dodecanedicarbonsäure, Isophthalsäure, Terephthalsäure, Cyclohexandicarbonsäure.

Geeignete Glykole sind beispielsweise Ethylenglykol, 1,2-Propandiol, 1,3-Propandiol, 1,3-Butandiol, 1,4-Butandiol, 1,5-Pentandiol, 1,6-Hexandiol, 2,2-Dimethyl-1,3-propandiol, 1,4-Cyclohexandimethanol, Decamethylenglykol, Dodecamethylenglykol.

OH-terminierte Polyether werden durch Reaktion eines Dioles oder Polyoles, vorzugsweise einem Alkyldiol oder Glykol, mit einem Ether, der Alkylenoxide mit 2 bis 6 Kohlenstoffatomen umfasst, typischerweise Ethylenoxid, erhalten.

Geeignete Kettenverlängerer sind beispielsweise aliphatische Glykole mit 2 bis 10 Kohlenstoffatomen, wie Ethylenglykol, Diethylenglykol, Propylenglykol, Dipropylenglykol, 1,4-Butandiol, 1,6-Hexandiol, 1,3-Butandiol, 1,5-Pentandiol, 1,4-Cyclohexandimethanol, Neopentyglykol.

Die dritte Komponente bei der Herstellung eines thermoplastischen Polyurethanes ist ein Isocyanat. Als Isocyanate können aromatische, aliphatische, cycloaliphatische und/oder araliphatische Isocyanate, bevorzugt Diisocyanate, eingesetzt werden. Beispielsweise 2,2'-Diphenylmethandiisocyanat, 2,4'-Diphenylmethandiisocyanat, 4,4'-Diphenylmethandiisocyanat (MDI), 1,5-Naphthylendiisocyanat (NDI), 2,4-Toluylendiisocyanat, 2,6-Toluylendiisocyanat (TDI), Diphenylmethandiisocyanat, 3,3'-Dimethyl-diphenyldiisocyanat, 1,2-Diphenylethandiisocyanat, Phenylendiisocyanat, Trimethylendiisocyanat, Tetramethylendiisocyanat, Pentamethylendiisocyanat, Hexamethylendiisocyanat, Heptamethylendiisocyanat, Oktamethylendiisocyanat, 2-Methylpentamethylen-1,5-diisocyanat, 2-Ethyl-butylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophorondiisocyanat, IPDI), 1,4- Bis(isocyanatomethyl)cyclohexan, 1,3- Bis(isocyanatomethyl)cyclohexan (HXDI), 1,4-Cyclohexandiisocyanat, 1-Methyl-2,4-cyclohexandiisocyanat, 1-Methyl-2,6-Dicyclohexylmethandiisocyanat, 4,4'-Dicyclohexylmethandiisocyanat (H₁₂MDI), 2,4'-Dicyclohexylmethandiisocyanat und/oder 2,2'-Dicyclohexylmethan-diisocyanat.

Bevorzugt können 2,2'-Diphenylmethandiisocyanat, 2,4'-Diphenyimethandiisocyanat, 4,4'-Diphenyimethandiisocyanat, 1,5-Naphthylendiisocyanat, 2,4-Toluylendiisocyanat, 2,6-Toluylendiisocyanat, Hexamethylendiisocyanat und/oder IPDI eingesetzt werden.

Neben polyester- und polyetherbasierenden thermoplastischen Polyurethanen können in dem erfindungsgemäßen Prozesshilfsmittel auch polycarbonatbasierende Polyurethane vorliegen. Diese können durch Umsetzung von Diisocyanaten mit OH-terminierten Polycarbonaten in Gegenwart eines Kettenverlängerers hergestellt werden.

Kommerziell erhältliche thermoplastische Polyurethane sind beispielsweise die Desmopan®-Typen der Firma Bayer, die Estane®-Typen der Firma Lubrizol oder die Elastollan®-Typen der Firma BASF.

Erfindungsgemäß beträgt der Anteil an thermoplastischem Polyurethan 20 bis 75 Gew.-%, bevorzugt 30 bis 60 Gew.-% und besonders bevorzugt 40 bis 50 Gew.-%, jeweils bezogen auf das Prozesshilfsmittel.

### c) Isocyanat

Das erfindungsgemäße Prozesshilfsmittel kann sowohl aromatische wie auch aliphatische Isocyanate enthalten. Bevorzugt handelt es sich um aliphatische oder aromatische Diisocyanate und aliphatische oder aromatische Triisocyanate. Beispielhaft seien 4,4'-Methylen-bis-phenylisocyanat (MDI), m-Xylylendiisocyanat (XDI), Phenylen-1,4-diisocyanat, Naphthalen-1,5-diisocyanat, Diphenylmethan-3,3'-dimethoxy-4,4'-diisocyanat und Toluoldiisocyanat (TDI) oder aliphatische Diisocyanate wie Isophorondiisocyanat (IPDI), 4,4'-Dicyclohexylmethandiisocyanat (H₁₂MDI), Hexamethylendiisocyanat, 1,4-Cyclohexyldiisocyanat (CHDI), Decan-1,10-diisocyanat und Dicyclohexylmethan-4,4'-diisocyanat genannt. Bevorzugt kann 4,4'-Methylenbisphenylisocyanat (MDI) oder Uretonimin modifiziertes MDI sein. Kommerziell erhältliche Isocyanate sind beispielsweise Desmodur® CD, Fa. Bayer oder Suprasec 2020, Fa. Huntsman.

Der Anteil an Isocyanat in dem erfindungsgemäßen Prozesshilfsmittel beträgt 0,5 bis 25 Gew.-%, bevorzugt 5 bis 22 Gew.-%, besonders bevorzugt 10 bis 20 Gew.-%, jeweils bezogen auf das Prozesshilfsmittel.

### d) Gleit- und Dispergiermittel

Das erfindungsgemäße Prozesshilfsmittel enthält weiterhin ein Gleit- und Dispergiermittel. Dieses dient als friktionsminderndes inneres und äußeres Gleitmittel und verbessert die Fließeigenschaften während der Herstellung des Prozesshilfsmittels. Zusätzlich verringert oder verhindert es das Ankleben an das umgebende Material. Schließlich dient es als Dispergiermittel für die hydrophobierten Metalloxidpartikel.

Das Gleit- und Dispergiermittel kann bevorzugt aus der Gruppe bestehend aus einem Ester oder einem Amid aliphatischer Carbonsäuren oder Carbonsäuresalzen mit jeweils 10 bis 45 Kohlenstoffatomen ausgewählt werden.

Insbesondere sind Fettsäurederivate wie Stearinsäureester, Fettsäureamide wie Stearinsäureamid und Fettsäureesteramide wie Stearinsäureamidalkylstearate zu nennen. Typische Beispiele können sein: Methylenbislauramid, Methylenbismyristamid, Methylenbispalmitamid, Methylenbisstearamid, Ethylenbisbehenamid, Methylenbisoleamid, Ethylenbislauramid, Ethylenbismyristamid, Ethylenbispalmitamid, Ethylenbisstearamid, Ethylenbisbehenamid, Ethylenbismontanamid und Ethylenbisoleamid.

Insbesondere wurde festgestellt, dass Fettsäureamide und hydrophobierte, pyrogen hergestellte Siliciumdioxidpartikel zu einer besonderen Stabilisierung der Schmelze bei der Herstellung des Prozesshilfsmittels und bei der Verwendung des Prozesshilfsmittels bei der Verarbeitung von thermoplastischen Polyurethanen führen.

Als Gleit- und Dispergiermittel können ebenso solche Stoffe eingesetzt werden, die ein Polyesterpolysiloxan-Blockcopolymer, bevorzugt ein Polyester-Polysiloxan-Polyester-Triblockcopolymer enthalten. Diese umfassen beispielsweise Polycaprolacton-Polydimethylsiloxan-Polycaprolacton Triblockcopolymere. Ein kommerziell erhältlicher Vertreter ist beispielsweise TEGOMER® H-Si 6440P, Fa. Evonik Goldschmidt.

Der Anteil an Gleit- und Dispergiermittel in dem erfindungsgemäßen Prozesshilfsmittel beträgt 0,5 bis 15, bevorzugt 2 bis 12,5 Gew.-% und besonders bevorzugt 5 bis 10 Gew.-%, jeweils bezogen auf das Prozesshilfsmittel.

Bei dem erfindungsgemäßen Prozesshilfsmittel handelt es sich um ein universelles Prozesshilfsmittel für die Verarbeitung von thermoplastischen Polyurethanen, d.h. hydrophobierte Metalloxidpartikel, thermoplastisches Polyurethan, Isocyanat und Gleit- und Dispergiermittel sind beliebig kombinierbar.

In einer bevorzugten Ausführungsform der Erfindung enthält das Prozesshilfsmittel
a) 20 - 40 Gew.-% hydrophobierte, wenigstens teilweise aggregierte pyrogene Siliciumdioxidpartikel,
b) 30 - 60 Gew.-% ein oder mehrerer thermoplastischer Polyurethane,
c) 5 - 20 Gew.-% Isocyanat,
d) 5 bis 10 Gew.-% Gleit- und Dispergiermittel, jeweils bezogen auf das Prozesshilfsmittel,
wobei diese Bestandteile wenigstens 90 Gew.-%, bevorzugt wenigstens 95 Gew.-% des Prozesshilfsmittels darstellen oder das Prozesshilfsmittel ausschließlich aus diesen Bestandteilen besteht. Dabei sollen die eventuell in den kommerziell erhältlichen thermoplastischen Polymeren zusätzlich enthaltenen Stoffe zum thermoplastischen Polymer zählen.

Ein weiterer Gegenstand der Erfindung ist ein Verfahren zur Herstellung des Prozesshilfsmittels bei dem man ein Gemisch aus einer Schmelze eines thermoplastischen Polyurethanes und hydrophobierten Metalloxidpartikeln, Isocyanat und Gleit- und Dispergiermittel in einen Extruder oder eine Spritzgussvorrichtung eindosiert. Dabei können die Bestandteile des erfindungsgemäßen Prozesshilfsmittels zusammen oder getrennt eindosiert werden.

Bevorzugt kann ein Extruder eingesetzt werden. Vorteilhaft erfolgt das Eindosieren in der Weise, dass das thermoplastische Polyurethan und die hydrophobierten Metalloxidpartikel zunächst gemischt werden, das Gemisch auf Temperaturen erhitzt wird, bei denen das thermoplastische Polyurethan geschmolzen vorliegt und zu einem späteren Zeitpunkt im Extruder in diese Mischung das Isocyanat und das Gleit- und Dispergiermittel eindosiert. Das erhaltene Prozesshilfsmittel wird nachfolgend abgekühlt und granuliert oder beim Granulieren abgekühlt Als Extruder können dem Fachmann bekannte Vorrichtungen eingesetzt werden. Die Temperatur der Schmelze beträgt üblicherweise 150°C bis 240°C, bevorzugt 180°C bis 230°C. Das thermoplastische Polyurethan kann in dem erfindungsgemäßen Verfahren in Form von Granulaten oder Pellets, bevorzugt als Granulat, eingesetzt werden. Die hydrophobierten Metalloxidpartikel können als Pulver oder Granulat eingesetzt werden.

Die Verwendung des erfindungsgemäßen Prozesshilfsmittels bei der Verarbeitung von thermoplastischen Polyurethanen führt zu einer erhöhten Stabilität der Schmelze, zu einer erhöhten Kristallisationsgeschwindigkeit, einer Verringerung der Reibung und zu einer Erhöhung des Molekulargewichtes. Daher ist ein weiterer Gegenstand der Erfindung die Verwendung des Prozesshilfsmittels bei der Verarbeitung von thermoplastischen Polyurethanen zu Filmen, Folien, Schläuchen, Kabelummantelungen, Spritzgussartikeln oder Fasern.

Insbesondere ist das erfindungsgemäße geeignet zur Herstellung von selbsttragenden Blasfolien. Unter "selbsttragend ist zu verstehen, dass bei der Herstellung der Folie kein Stützkörper nötig ist.

Daher ist ein weiterer Gegenstand der Erfindung ein Verfahren zur Herstellung von selbsttragenden Folien, bei dem man ein Gemisch eines thermoplastischen Polyurethanes und 0,5 bis 35 Gew.-%, bevorzugt 1 bis 20 Gew.-% und besonders bevorzugt 5 bis 15 Gew.-%, jeweils bezogen auf die Gesamtmenge von thermoplastischem Polyurethan, des erfindungsgemäßen Prozesshilfsmittels in einen Extruder eindosiert, das Gemisch aufschmilzt und über eine Folienblaskopf zu einer Folie extrudiert.

### Beispiele:

### A) Herstellung erfindungsgemäßer Prozesshilfsmittel Einsatzstoffe

- AEROSIL® R974, Fa. Evonik Degussa
- Estane® 58271: ist ein 85A auf einem aromatischen Polyester basierendes TPU, Fa. Lubrizol.
- Estane® 58300: ist ein 82A auf einem aromatischen Polyether basierendes TPU, Fa. Lubrizol.
- Desmopan® W85085A: aliphatisches TPU auf Basis eines Polyesteretherpolyols, Fa. Bayer MaterialScience AG
- Desmodur® CD: modifiziertes Diphenyl-methan-4,4'-diisocyanat, Fa. Bayer MaterialScience AG
- Vestanat® 1890-100: cycloaliphatisches Polyisocyanat auf Basis IPDI, Fa. Evonik Degussa
- Suprasec®: MDI, Fa. Huntsman
- Erucamid: CRODA ER
- Ethylenbisoleamid: CRODA EBO
- Tegomer® H-Si 6440P: Polyester-Polysiloxan-Polyester-Blockcopolymer, Evonik Goldschmidt.
- Acrawax® E: Ethylenbisstearamid, Fa. Lonza

Beispiel 1: Ein Gemisch aus 50 Gewichtsanteilen Estane® 58271 und 30 Gewichtsanteilen AEROSIL® R974 werden in einen Zweischneckenextruder, der mit einer Schnecken-Geschwindigkeit von 600 U/min und bei einer Temperatur von 160°C bis 200°C betrieben wird, eindosiert. Nachfolgend werden 20 Gewichtsanteile Suprasec® und 10 Gewichtsanteile Erucamid/Ethylenbisoleamid eindosiert. Das Gemisch wird nachfolgend granuliert.

Die Beispiele 2 bis 4 werden analog ausgeführt. Einsatzstoffe und Einsatzmengen sind in Tabelle 2 wiedergegeben.

**Tabelle 2: Prozesshilfsmittel; Einsatzstoffe und -mengen**

| Beispiel | **1** | **2** | **3** | **4** |
|---|---|---|---|---|
| TPU | Estane^{®} 58271 | Estane^{®} 58271 | Estane^{®} 58300 | Desmopan^{®} W85085A |
| Gew.-% | 50 | 40 | 40 | 30 |
| hydrophob. Metalloxidpartikel | AEROSIL^{®} R974 | AEROSIL^{®} R974 | AEROSIL^{®} R974 | AEROSIL^{®} R974 |
| Gew.-% | 30 | 30 | 30 | 40 |
| Isocyanat | MDI | MDI | Desmodur^{®} CD | Vestanat^{®} 1890-100 |
| Gew.-% | 10 | 20 | 20 | 28 |
| Gleit- und Dispergiermittel | Erucamid/ EBO | Erucamid/ EBO | EBO/ Tegomer^{®} H-Si 6440P | EBO Acrawax E |
| Gew.-% | 10 | 10 | 10 | 2 |

### B) Herstellung von selbsttragenden Blasfolien

Beispiel 5: Das thermoplastische Polyurethan Estane® 58447 und 10 Gewichtsanteile, bezogen auf das thermoplastische Polyurethan, des erfindungsgemäßen Prozesshilfsmittels aus Beispiel 1, werden in einem Extruder aufgeschmolzen und durch einen Folienblaskopf zu einer Schlauchfolie extrudiert.

Beispiel 6: analog Beispiel 5, jedoch unter Einsatz von Desmopan® 786E, Bayer anstelle von Estane^{®} 58447.

Beispiel 7: analog Beispiel 5, jedoch unter Einsatz von Desmopan® 3660D, Bayer anstelle von Estane® 58447.

Es ist dem Fachmann bekannt, dass die in den Beispielen 5 bis 7 eingesetzten thermoplastischen Polyurethane nur schwierig oder überhaupt nicht zu selbstragenden Folien verarbeitet werden können. Mit Hilfe des erfindungsgemäßen Prozesshilfsmittels aus Beispiel 1 gelingt dies in allen drei Beispielen.

In Gegenwart des erfindungsgemäßen Prozesshilfsmittels kann zudem eine um ca. 15°C höhere Verarbeitungstemperatur gewählt werden, wodurch sogenanntes "die-drooling", das Herabtropfen von Schmelze an der Düse, und das Vorliegen von nichtgeschmolzenem thermoplastischen Polymer verringert oder vermieden werden kann. Die Gegenwart des erfindungsgemäßen Prozesshilfsmittels führt zu einer Erhöhung der Dehnbarkeit ("tensile strength") zusammen mit einer Verringerung der Ausdehnung ("elongation").

## Patentansprüche

1. Prozesshilfsmittel enthaltend
a) 10 - 50 Gew.-% hydrophobierte, wenigstens teilweise aggregierte Metalloxidpartikel ausgewählt aus der Gruppe bestehend aus Aluminiumoxid, Siliciumdioxid und Mischungen der vorgenannten Metalloxide,
b) 20 - 75 Gew.-% ein oder mehrere thermoplastischer Polyurethane,
c) 0,5 - 25 Gew.-% ein oder mehrere Isocyanate,
d) 0,5 - 15 Gew.-% ein oder mehrere als Gleit- und Dispergierhilfsmittel wirkende Verbindungen
wobei die Summe der Bestandteile a) bis d) wenigstens 90 Gew.-%, bezogen auf das Prozesshilfsmittel, beträgt.

2. Prozesshilfsmittel nach Anspruch 1, **dadurch gekennzeichnet, dass** die hydrophobierten Metalloxidpartikel auf ihrer Oberfläche die Gruppe 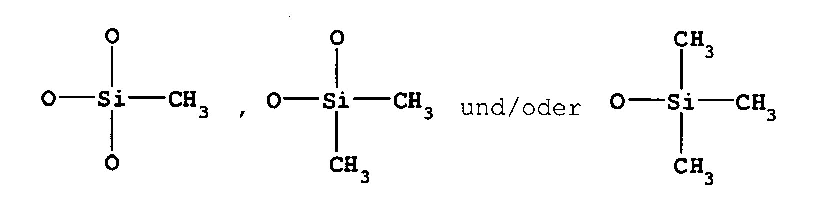 tragen.

3. Prozesshilfsmittel nach den Ansprüchen 1 oder 2, **dadurch gekennzeichnet, dass** die hydrophobierten Metalloxidpartikel pyrogener Herkunft sind.

4. Prozesshilfsmittel nach Anspruch 3, **dadurch gekennzeichnet, dass** die OH-Gruppen-Dichte der hydrophobierten Metalloxidpartikel gleich oder kleiner als 1 OH/nm2 ist.

5. Prozesshilfsmittel nach den Ansprüchen 3 oder 4, **dadurch gekennzeichnet, dass** es sich um hydrophobierte Siliciumdioxidpartikel pyrogener Herkunft handelt.

6. Prozesshilfsmittel nach den Ansprüchen 1 bis 5, **dadurch gekennzeichnet, dass** das Gleit- und Dispergiermittel ausgewählt ist aus der Gruppe bestehend aus einem Ester oder einem Amid aliphatischer Carbonsäuren oder Carbonsäuresalzen mit jeweils 10 bis 45 Kohlenstoffatomen.

7. Verfahren zur Herstellung des Prozesshilfsmittels gemäß der Ansprüche 1 bis 6, **dadurch gekennzeichnet, dass** man ein Gemisch aus einer Schmelze eines thermoplastischen Polyurethanes und hydrophobierten Metalloxidpartikel, Isocyanat und das Gleit- und Dispergiermittel in einen Extruder oder eine Spritzgussvorrichtung eindosiert.

8. Verwendung des Prozesshilfsmittels gemäß der Ansprüche 1 bis 7 bei der Verarbeitung von thermoplastischen Polyurethanen zu Filmen, Folien, Schläuchen, Kabelummantelungen, Spritzgussartikeln oder Fasern.

9. Verfahren zur Herstellung einer selbsttragenden Folie, **dadurch gekennzeichnet, dass** man ein Gemisch eines thermoplastischen Polyurethanes und 0,5 bis 35 Gew.-%, bezogen auf die Gesamtmenge von thermoplastischem Polyurethan, des Prozesshilfsmittels gemäß der Ansprüche 1 bis 6 in einen Extruder eindosiert, das Gemisch aufschmilzt und über eine Folienblaskopf zu einer Folie extrudiert.

## Claims

1. Processing aids comprising
a) 10-50% by weight of hydrophobized, at least partially aggregated, metal oxide particles chosen from the group consisting of aluminium oxide, silicon dioxide and mixtures of the abovementioned metal oxides,
b) 20-75% by weight of one or more thermoplastic polyurethanes,
c) 0.5-25% by weight of one or more isocyanates,
d) 0.5-15% by weight of one or more compounds which act as lubricant and dispersant,
the sum of the constituents a) to d) amounting to at least 90% by weight, based on the processing aid.

2. Processing aid according to Claim 1, **characterized in that** the hydrophobized metal oxide particles carry, on their surface, the group

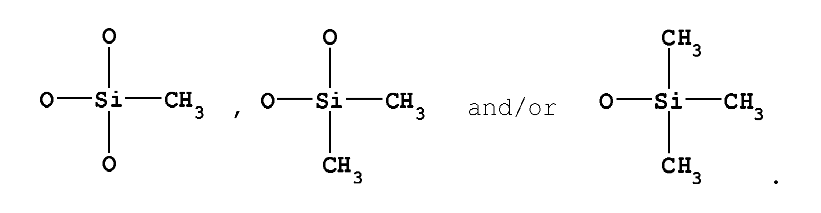

3. Processing aid according to Claim 1 or 2, **characterized in that** the hydrophobized metal oxide particles are of pyrogenic origin.

4. Processing aid according to Claim 3, **characterized in that** the density of OH groups of the hydrophobized metal oxide particles is equal to or less than 1 OH/nm².

5. Processing aid according to Claim 3 or 4, **characterized in that** hydrophobized silicon dioxide particles of pyrogenic origin are involved.

6. Processing aid according to Claims 1 to 5, **characterized in that** the lubricant and dispersant is chosen from the group consisting of an ester or an amide of aliphatic carboxylic acids or carboxylic acid salts with in each case from 10 to 45 carbon atoms.

7. Process for the preparation of the processing aid according to Claims 1 to 6, **characterized in that** a mixture of a melt of a thermoplastic polyurethane and hydrophobized metal oxide particles, isocyanate and the lubricant and dispersant is metered into an extruder or an injection-moulding device.

8. Use of the processing aid according to Claims 1 to 7 in the processing of thermoplastic polyurethanes to give films, hoses, cable sheathings, injection mouldings or fibres.

9. Process for the preparation of a self-supporting film, **characterized in that** a mixture of a thermoplastic polyurethane and from 0.5 to 35% by weight, based on the total amount of thermoplastic polyurethane, of the processing aid according to Claims 1 to 6 is metered into an extruder and the mixture is melted and extruded via a film blowing die to give a film.

## Revendications

1. Adjuvant de processus contenant
a) 10-50% en poids de particules d'oxyde de métal hydrofugées, au moins partiellement agrégées, choisies dans le groupe constitué par l'oxyde d'aluminium, le dioxyde de silicium et des mélanges des oxydes métalliques susmentionnés,
b) 20-75% en poids d'un ou de plusieurs polyuréthanes thermoplastiques,
c) 0,5-25% en poids d'un ou de plusieurs isocyanates,
d) 0,5-15% en poids d'un ou de plusieurs composés agissant comme adjuvant de lubrification et de dispersion
la somme des constituants a) à d) valant au moins 90% en poids, par rapport à l'adjuvant de processus.

2. Adjuvant de processus selon la revendication 1, **caractérisé en ce que** les particules d'oxyde de métal hydrofugées portent en leur surface les groupes

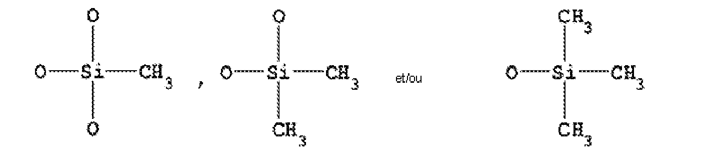

3. Adjuvant de processus selon la revendication 1 ou 2, **caractérisé en ce que** les particules d'oxyde de métal hydrofugées sont d'origine pyrogène.

4. Adjuvant de processus selon la revendication 3, **caractérisé en ce que** la densité de groupes OH des particules d'oxyde de métal hydrofugées est égale ou inférieure à 1 OH/nm².

5. Adjuvant de processus selon la revendication 3 ou 4, **caractérisé en ce qu'**il s'agit de particules de dioxyde de silicium hydrofugées d'origine pyrogène.

6. Adjuvant de processus selon les revendications 1 à 5, **caractérisé en ce que** l'agent de lubrification et de dispersion est choisi dans le groupe constitué par un ester ou un amide d'acides carboxyliques ou de sels d'acides carboxyliques aliphatiques comprenant à chaque fois 10 à 45 atomes de carbone.

7. Procédé pour la préparation de l'adjuvant de processus selon les revendications 1 à 6, **caractérisé en ce qu'**on dose un mélange d'une masse fondue d'un polyuréthane thermoplastique et de particules d'oxyde de métal hydrofugées, d'isocyanate et l'agent de lubrification et de dispersion dans une extrudeuse ou un dispositif de moulage par injection.

8. Utilisation de l'adjuvant de processus selon les revendications 1 à 7 lors de la transformation de polyuréthanes thermoplastiques en fils, feuilles, flexibles, gaines de câbles, objets moulés par injection ou fibres.

9. Procédé pour la fabrication d'une feuille autoportante, **caractérisé en ce qu'**on dose un mélange d'un polyuréthane thermoplastique et de 0,5 à 35% en poids, par rapport à la quantité totale de polyuréthane thermoplastique, de l'adjuvant de processus selon les revendications 1 à 6 dans une extrudeuse, on fond le mélange et on l'extrude en une feuille via une tête de soufflage de feuilles.
